# EUROPÄISCHE PATENTSCHRIFT

(11) **EP 1 361 115 B1**
(45) Veröffentlichungstag und Bekanntmachung des Hinweises auf die Patenterteilung: **23.01.2008**
(21) Anmeldenummer: 03009482.5
(22) Anmeldetag: 26.04.2003
(51) Int. Cl.: B60R 1/12, B60R 1/00, B60Q 1/52

(54) **Verfahren zum Betreiben eines Fahrzeugumfeldüberwachungssystems und Umfeldüberwachungssystem**
Method of operating a vehicle surrounding area monitoring system and surrounding area monitoring system
Système de surveillance de l'environnement d'un vehicle et sa méthode de mise en oeuvre

(30) Priorität: 08.05.2002 DE 10220569
(43) Veröffentlichungstag der Anmeldung: 12.11.2003
(73) Patentinhaber: Valeo Schalter und Sensoren GmbH, 74321 Bietigheim-Bissingen (DE)
(72) Erfinder: Rath, Joachim, 74379 Ingersheim (DE)
(74) Vertreter: Bulling, Alexander

(56) Entgegenhaltungen:
- WO-A-01/45067
- WO-A-02/095445
- FR-A- 2 698 449
- US-A- 5 325 096
- US-A- 5 963 127
- US-B1- 6 193 380
- US-B1- 6 232 910

## Beschreibung

Die Erfindung betrifft ein Verfahren zum Betreiben eines Fahrzeugumfeldüberwachungssystems und ein Fahrzeugüberwachungssystem.

Moderne Fahrzeuge weisen derartige Systeme zur Überwachung des Nahbereichs des Fahrzeugs auf. Bekannte Umfeldüberwachungssysteme und Verfahren zum Betreiben der Systeme werden insbesondere beim Einparkvorgang zur Vermeidung von Kollisionen eingesetzt. Nähert sich das Fahrzeug einem Objekt, so wird dem Fahrzeuglenker signalisiert, dass ein Objekt im Nahbereich des Fahrzeuges vorhanden ist und ggf. eine Kollision stattfinden kann.

Aus der WO01/45067 A ist ein Toter-Winkel-Detektor bekannt geworden, der Sensoren an einem Außenrückspiegel des Fahrzeugs aufweist. Diese Sensoren erfassen den Tot-Winkel-Bereich des Fahrzeugs. Wird ein Gegenstand in dem von diesen Sensoren erfassen Bereich erkannt, so wird ein Warnsignal gegeben.

Aus der US 6,193,380 B1 ist ein Außenspiegel eines Fahrzeugs bekannt geworden, der aus seiner normalen Position in eine Tot-Winkel-Position verschwenkbar ist. Ein Verschwenken des Spiegels erfolgt dann, wenn sich ein Gegenstand im Bereich des toten Winkels des Fahrzeugs befindet.

Die vorliegende Erfindung beschäftigt sich damit, ob bzw. wie derartige Umfeldüberwachungssysteme betrieben werden können, um daraus weiteren Nutzen erzielen zu können. In diesem Zusammenhang soll ein Fahrzeugumfeldüberwachungssystem bereitgestellt werden, das eine erweiterte, insbesondere zu einer zusätzlichen Sicherheit beitragende, Anwendung erlaubt.

Diese Aufgabe wird bei einem Verfahren gemäß Anspruch 1 gelöst. Beim Blick in den jeweiligen Außenspiegel kann der Fahrzeuglenker zum einen den von dem Spiegel reflektierten Bereich und zum anderen den Bereich im Gesichtsfeld wahrnehmen. Der nicht sichtbare Bereich, der zwischen diesen beiden sichtbaren Bereichen liegt, wird in der Regel als toter Winkel bezeichnet. Beispielsweise beim Spurwechsel ist es aufgrund der toten Winkel erforderlich, dass der Fahrzeuglenker sich bedingt umwendet bzw. einen Schulterblick vollzieht, um sicher zu sein, dass sich kein, in den Rückspiegeln nicht sichtbares Fahrzeug, seitlich versetzt zu dem Fahrzeug des Fahrzeuglenkers befindet. Das Durchführen des Schulterblicks ist für den Fahrzeuglenker mühselig, weshalb ein erforderlicher Schulterblick häufig nicht gemacht wird. Mit der Erfindung wird der Vorteil erreicht, dass auf einen Schulterblick verzichtet werden kann, weil der Signalgeber über ein Warnsignal dem Fahrzeuglenker signalisiert, ob im Bereich der toten Winkel, der von dem Fahrzeugumfeldüberwachungssystem während der Fahrt überwacht wird, andere Fahrzeuge vorhanden sind. Ein derartiges Verfahren trägt folglich wesentlich zu einer erhöhten Sicherheit beim Betreiben eines Fahrzeugs bei.

Erfindungsgemäß ist dabei vorgesehen, dass die nicht sichtbaren Bereiche in Abhängigkeit von der Einstellung wenigstens eines der Rückspiegel und/oder von der Sitzeinstellung des Fahrersitzes bestimmt werden. Je nach Sitzeinstellung und nach Einstellung der Rückspiegel werden den Verfahren folglich unterschiedliche tote Winkel zugrunde gelegt. Hierbei können beispielsweise an den Rückspiegeln bzw. an dem Sitz des Fahrers entsprechende Sensoren vorgesehen sein, die die jeweilige Einstellung erfassen und in das Verfahren einbringen. Dies hat den Vorteil, dass die toten Winkel sehr genau bestimmbar sind und nur dann ein Signal gegeben wird, wenn ein anderes Fahrzeug tatsächlich im Bereich der toten Winkel bzw. in den an die toten Winkel angrenzenden Bereiche vorhanden ist.

Ein vorteilhaftes Verfahren ergibt sich dann, wenn ein Warnsignal auch dann erzeugt wird, wenn sich ein Gegenstand in den an die nicht sichtbaren Bereiche angrenzenden Bereichen befindet. Damit wird sichergestellt, dass bereits im Übergang von den noch für den Fahrzeuglenker in den Rückspiegeln sichtbaren Bereichen in den Bereich der toten Winkel der Fahrzeuglenker gewarnt wird. Bei Blick in den entsprechenden Rückspiegel kann sich der Fahrzeuglenker ein Bild davon machen, in welchen toten Winkel das andere Fahrzeug einfährt. Damit behält der Fahrzeuglenker die Übersicht über das Geschehen um das Fahrzeug.

Vorteilhafterweise kann das Warnsignal als akustisches und/oder optisches Signal erfolgen.

Als besonders vorteilhaft hat sich herausgestellt, wenn das Warnsignal ein optisches Signal ist, das im Gesichtsfeld des Fahrzeuglenkers liegt, wenn der Fahrzeuglenker in den bzw. in die Rückspiegel blickt. Dies hat den Vorteil, dass der Fahrzeuglenker nur dann von anderen Fahrzeugen, die sich im toten Winkel befinden, in Kenntnis gesetzt wird, wenn tatsächlich die Absicht besteht, die Spur des Fahrzeugs zu wechseln. Besteht keine Absicht eines Spurwechsels, so wird der Fahrzeuglenker normalerweise nicht in den entsprechenden Rückspiegel blicken und wird folglich das Warnsignal nicht wahrnehmen. Dadurch wird der Fahrzeuglenker nicht unnötigerweise abgelenkt.

Besonders vorteilhaft ist, wenn das optische Signal im Bereich der Rückspiegel des Fahrzeuges, insbesondere des Innenspiegels und/oder der Außenrückspiegel, erscheint. Beim Blicken in den entsprechenden Rückspiegel wird der Fahrzeuglenker auf das optische Warnsignal aufmerksam.

Dabei kann vorteilhafterweise das optische Signal in oder an der Oberfläche wenigstens eines Rückspiegels, und insbesondere im Randbereich des jeweiligen Rückspiegels, erscheinen. Dies hat den Vorteil, dass das Warnsignal den Blick in den Rückspiegel nicht beeinträchtigt, weshalb der Fahrzeuglenker ungestört den in dem Rückspiegel sichtbaren Bereich wahrnehmen kann.

Die eingangs genannte Aufgabe wird ferner durch ein Fahrzeugumfeldüberwachungssystem gemäß dem Anspruch 8 gelöst.

Vorteilhafterweise ist der Signalgeber bzw. sind die Signalgeber optische und/oder akustische Signalgeber. Als optische Signalgeber kommen insbesondere Leuchten, beispielsweise LED's, in Betracht. Ferner ist denkbar, dass die Signale über ein Display oder einen Bildschirm dem Fahrzeuglenker mitgeteilt werden.

Ein besonders vorteilhaftes System ergibt sich dann, wenn die optischen Signalgeber in oder an der Oberfläche wenigstens eines Rückspiegels derart angeordnet sind, dass sie von der Oberfläche des Spiegelglases abgedeckt sind und bei Abgabe des Warnsignals durch das Spiegelglas für den Fahrzeuglenker sichtbar aufleuchten. Dabei sind die Signalgeber vorteilhafterweise bei Nichtaufleuchten für den Fahrzeuglenker nicht sichtbar. Dies hat den Vorteil, dass das Vorhandensein der Signalgeber die Spiegelfläche nicht beeinträchtigt. Folglich können sie bei Nichtaufleuchten zu keinen Irritationen führen. Dadurch, dass das Spiegelglas den bzw. die Signalgeber abdeckt, sind die Signalgeber, insbesondere vor Umwelteinflüssen, geschützt angeordnet.

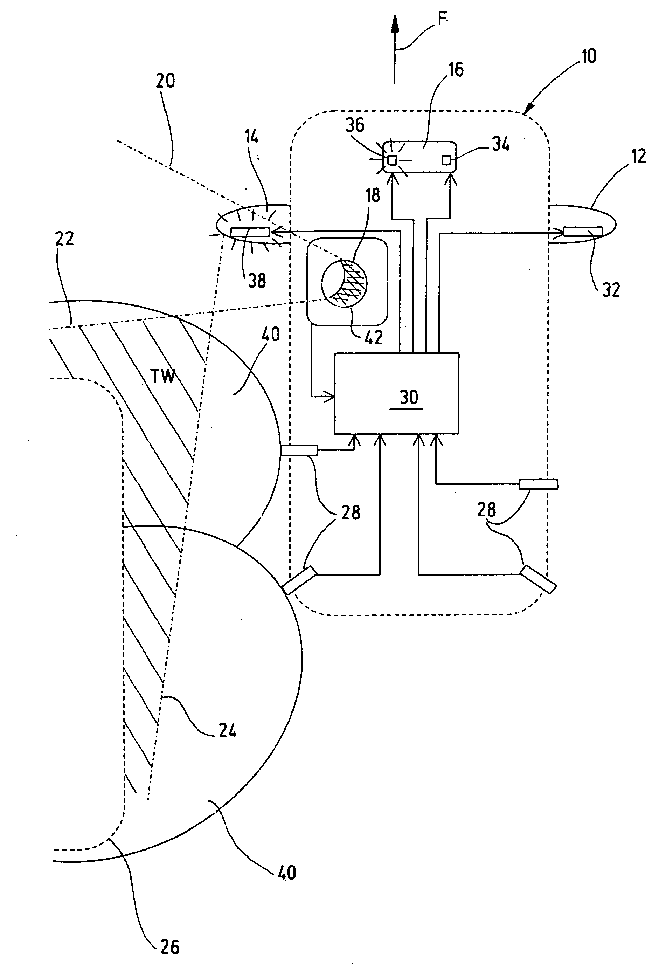

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

In der Figur ist ein Fahrzeug 10 schematisch von oben dargestellt, das zwei Außenspiegel 12, 14 und einen Innenspiegel 16 aufweist. Die Fahrtrichtung des Fahrzeuges ist durch den Pfeil F angedeutet. Ferner ist ein Fahrzeuglenker 18 angedeutet, der seinen Blick in Richtung des Außenspiegels 14 wendet. Das Gesichtsfeld des Fahrzeuglenkers 18 wird durch die beiden Linien 20 und 22 begrenzt. Dadurch, dass der Fahrzeuglenker 18 in den Außenspiegel 14 blickt, nimmt er auch den Bereich seitlich neben dem Fahrzeug 10 bis zur Linie 24 wahr. Für den Fahrzeuglenker 18 ist der Bereich zwischen den Linien 22 und 24, der schraffiert dargestellt ist, ohne Umwenden bzw. ohne einen Schulterblick nicht sichtbar. Dieser Bereich wird im Allgemeinen als toter Winkel TW bezeichnet. In der Figur befindet sich ein Gegenstand, nämlich ein weiteres Fahrzeug 26 im Bereich TW. Dieses Fahrzeug 26 ist für den Fahrzeuglenker 18, ohne dass er sich umwendet, nicht sichtbar.

Das Fahrzeug 10 ist mit einem erfindungsgemäßen Fahrzeugumfeldüberwachungssystem ausgestattet. Das System umfasst Sensoren 28 zur Überwachung des Nahbereichs des Fahrzeuges 10. Die von den Sensoren 28 erfassten Bereiche sind durch Abstralkeulen 40 angedeutet. Vorteilhafterweise erfassen die Signalgeber 28 Gegenstände, die einen Abstand bis zu 5 m und insbesondere zu bis 10 m vom Fahrzeug haben. Ferner umfasst das System ein Regel- und Steuergerät 30 zur Auswertung der von den Sensoren 28 erfassten Signalen. Das System sieht außerdem insgesamt vier Signalgeber 32, 34, 36 und 38 in Form von Warnleuchten vor. Der Signalgeber 32 ist in den Außenspiegel 12 integriert und der Signalgeber 38 in den Außenspiegel 14. Die beiden Signalgeber 34 und 36 sind in den Innenspiegel 16 integriert. Die Signalgeber 32, 34, 36 und 38 sind von dem Steuergerät 30 ansteuerbar.

Erfindungsgemäß wird der schraffierte Bereich des toten Winkels TW von den Sensoren 28 überwacht. Befindet sich beispielsweise ein Fahrzeug 26 in dem Bereich des toten Winkels, so wird es von den Sensoren 28 erfasst und eine Meldung an das Steuergerät 30 gegeben. Das Steuergerät 30 aktiviert die Signalgeber 32, 34, 36 und 38. Befindet sich der entsprechende Gegenstand auf der linken Seite des Fahrzeugs 10, wie in der Figur, so leuchtet im Außenspiegel 14 der Signalgeber 38 und im Innenspiegel 16 der Signalgeber 36 auf. Bei Vorhandensein eines Gegenstandes, insbesondere eines Fahrzeuges im toten Winkel TW auf der rechten Seite des Fahrzeuges 10, leuchtet im rechten Außenspiegel 12 der Signalgeber 32 und im Innenspiegel 16 der Signalgeber 34 auf. Blickt der Fahrzeuglenker 18 vor dem Spurwechsel in den linken Außenspiegel 14, so wird ihm signalisiert, ob ein Fahrzeug 26 im Bereich des linken toten Winkels TW vorhanden ist oder nicht. Leuchtet der Signalgeber 38 auf, so ist ein Fahrzeug im toten Winkel TW. Der Fahrzeuglenker ist folglich gewarnt und wird den Spurwechsel nicht vollziehen. Entsprechendes gilt für den toten Winkel auf der rechten Seite des Fahrzeuges.

Neben den optischen Signalgebern 32, 34, 36, 38 können weitere Signalgeber, insbesondere akustische Signalgeber, vorgesehen sein. Vorzugsweise sind die optischen Signalgeber 32, 34, 36, 38 derart an den Spiegeln 12, 14, 16 angeordnet, dass sie von der Oberfläche des Spiegelglases abgedeckt sind, und bei Abgabe des Warnsignals durch das Spiegelglas für den Fahrzeuglenker 18 sichtbar aufleuchten. Hierzu ist das Spiegelglas vorteilhafterweise in eine Richtung, nämlich von der Innenseite hin zu der dem Fahrzeuglenker 18 zugewandten Oberfläche, lichtdurchlässig. Das Aufleuchten der Signalgeber 32, 34, 36, 38 kann von dem Fahrzeuglenker 18 wahrgenommen werden. Bei Nichtaufleuchten der Signalgeber 32, 34, 36, 38 sind die Signalgeber 32, 24, 36, 38 für den Fahrzeuglenker nicht sichtbar und beeinträchtigen folglich nicht den Blick in den jeweiligen Spiegel 12, 14, 16.

Vorteilhafterweise überwachen die Sensoren 28 auch die an den Bereich des toten Winkels angrenzenden Bereiche, die eigentlich für den Fahrzeuglenker 18 noch sichtbar sind.

Der Fahrzeuglenker 18 sitzt auf einem Fahrzeugsitz 42. Je nach Einstellung des Sitzes 42 und je nach Einstellung der Spiegel 12, 14, 16 ändert sich der Bereich des toten Winkels. Die Sitzposition des Fahrzeuglenkers kann, wie in der Figur dargestellt ist, dem Steuergerät 30 mitgeteilt werden. Ferner kann über an den Spiegeln vorhandenen Sensoren dem Steuergerät 30 mitgeteilt werden, in welcher Position sich die Spiegel 12, 14, 16 befinden. Aus diesen Daten und aus bekannten Fahrzeuggeometrien kann das Steuergerät 30 bei entsprechender Programmierung die Bereiche der toten Winkel bestimmen.

## Patentansprüche

1. Verfahren zum Betreiben eines den Einparkvorgang eines Fahrzeugs (10) unterstützenden Fahrzeugumfeldüberwachungssystems derart, dass der Nahbereich des Fahrzeugs überwacht wird, dass der innerhalb des überwachten Nahbereichs liegende, für den Fahrzeuglenker (18) beim Blick in den jeweiligen Rückspiegel (12, 14, 16) nicht sichtbare Bereich (TW) in Abhängigkeit von der Einstellung wenigstens eines der Rückspiegel (12, 14, 16) und/oder von der Sitzeinstellung des Fahrersitzes (42) bestimmt wird und dass ein Signalgeber (32, 34, 36, 38) ein Warnsignal erzeugt, wenn sich ein Gegenstand (26), insbesondere ein anderes Fahrzeug, in diesem den für den Fahrzeuglenker (18) nicht sichtbaren Bereich (TW) befindet.

2. Verfahren nach Anspruch 1, **dadurch gekennzeichnet, dass** ein Warnsignal auch dann erzeugt wird, wenn sich ein Gegenstand (26) in den an die nicht sichtbaren Bereiche (TW) angrenzenden Bereichen befindet.

3. Verfahren nach Anspruch 1 oder 2, **dadurch gekennzeichnet, dass** das Warnsignal ein akustisches und/oder optisches Signal ist.

4. Verfahren nach einem der vorhergehenden Ansprüche, **dadurch gekennzeichnet, dass** das Warnsignal ein optisches Signal ist, das im Gesichtsfeld (20, 21, 22) des Fahrzeuglenkers (18) liegt, wenn der Fahrzeuglenker (18) in den bzw. die Rückspiegel blickt.

5. Verfahren nach Anspruch 4, **dadurch gekennzeichnet, dass** das optische Signal im Bereich der Rückspiegel (12, 14, 16, 18) des Fahrzeuges (10), insbesondere des Innenspiegels (16) und/oder der Außenrückspiegel (12, 14), erscheint.

6. Verfahren nach Anspruch 4 oder 5, **dadurch gekennzeichnet, dass** in oder an der Oberfläche wenigstens eines Rückspiegels (12, 14, 16), insbesondere im Randbereich des jeweiligen Rückspiegels (12, 14, 16), das optische Signal erscheint.

7. Fahrzeugumfeldüberwachungssystem zur Überwachung des Nahbereichs eines Fahrzeuges (10), das zur Unterstützung des Einparkvorganges eines Fahrzeugs (10) einsetzbar und zur Durchführung des Verfahrens nach einem der vorhergehenden Ansprüche geeignet ist, mit den Nahbereich des Fahrzeuges erfassenden Sensoren, mit einem die von den Sensoren erfassten Werte auswertenden Steuer- und/oder Regelgerät (30), mit Sensoren an Rückspiegeln und/oder am Sitz des Fahrers zur Erfassung der jeweiligen Einstellung, und mit wenigstens einem von dem Steuer- und/oder Regelgerät (30) ansteuerbaren Signalgeber (32, 34, 36, 38) zur Erzeugung eines Warnsignals, wobei das Steuer- und/oder Regelgerät (30) in Abhängigkeit von der Einstellung wenigstens eines der Rückspiegel (12, 14, 16) und/oder von der Sitzeinstellung des Fahrersitzes (42) den innerhalb des überwachten Nahbereichs liegenden, für den Fahrzeuglenker (18) beim Blick in den jeweiligen Rückspiegel (12, 14, 16) nicht sichtbare Bereich (TW) bestimmt.

8. System nach Anspruch 7, **dadurch gekennzeichnet, dass** die Signalgeber (32, 34, 36, 38) optische und/oder akustische Signalgeber sind.

9. System nach Anspruch 7 oder 8, **dadurch gekennzeichnet, dass** optische Signalgeber (32, 34, 36, 38) derart angebracht sind, dass sie im Gesichtsfeld (20, 21, 22) des Fahrzeuglenkers (18) liegen, wenn der Fahrzeuglenker in den bzw. die Rückspiegel (12, 14,16) blickt.

10. System nach Anspruch 7, 8 oder 9, **dadurch gekennzeichnet, dass** optische Signalgeber (32, 34, 36, 38) im Bereich der Rückspiegel (12, 14, 16) des Fahrzeuges, insbesondere des Innenrückspiegels (16) und/oder der Außenrückspiegel (12, 14), angebracht sind.

11. System nach einem der Ansprüche 7 bis 10, **dadurch gekennzeichnet, dass** optische Signalgeber (32, 34, 36, 38) in oder an der Oberfläche wenigsten eines Rückspiegels (12, 14, 16), insbesondere im Randbereich des jeweiligen Rückspiegel (12, 14, 16) angeordnet sind.

12. System nach einem der Ansprüche 7 bis 11, **dadurch gekennzeichnet, dass** optische Signalgeber (32, 34, 36, 38) derart angeordnet sind, dass sie von der Oberfläche des Spiegelglases abgedeckt sind und bei Abgabe des Warnsignal durch das Spiegelglas für den Fahrzeuglenker sichtbar aufleuchten.

## Claims

1. Method for operating a vehicle environment monitoring system supporting the parking process of a vehicle (10) in such a way that the vicinity of the vehicle is monitored, that the region (TW) located within the monitored vicinity and not visible to the vehicle driver (18) when looking into the respective rear-view mirror (12, 14, 16) is determined as a function of the setting of at least one of the rear-view mirrors (12, 14, 16) and/or of the seat setting of the driver's seat (42) and that the signal generator (32, 34, 36, 38) generates a warning signal if an object (26), in particular another vehicle, is present in this region (TW) not visible to the vehicle driver (18).

2. Method according to Claim 1, **characterized in that** a warning signal is also generated when an object (26) is present in the regions adjacent to the regions (TW) which are not visible.

3. Method according to Claim 1 or 2, **characterized in that** the warning signal is an acoustic and/or optical signal.

4. Method according to any of the preceding claims, **characterized in that** the warning signal is an optical signal which is in the field of view (20, 21, 22) of the vehicle driver (18) when the vehicle driver (18) looks into the rear-view mirror or the rear-view mirrors.

5. Method according to Claim 4, **characterized in that** the optical signal appears in the region of the rear-view mirrors (12, 14, 16, 18) of the vehicle (10), in particular of the interior mirror (16) and/or the exterior rear-view mirrors (12, 14, 16).

6. Method according to Claim 4 or 5, **characterized in that** the optical signal appears in or on the surface of at least one rear-view mirror (12, 14, 16), in particular in the edge region of the respective rear-view mirror (12, 14, 16).

7. Vehicle environment monitoring system for monitoring the vicinity of a vehicle (10), which can be used for supporting the parking process of a vehicle (10) and is suitable for carrying out the process according to any of the preceding claims, comprising sensors detecting the vicinity of the vehicle, comprising a controller and/or regulator (30) evaluating the values determined by the sensors, comprising sensors on rear-view mirrors and/or on the driver's seat the detecting the respective setting, and comprising at least one signal generator (32, 34, 36, 38) which can be actuated by the controller and/or regulator (30) for generating a warning signal, the controller and/or regulator (30) determining the region (TW) located within the monitored vicinity and not visible to the vehicle driver (18) when looking into the respective rear-view mirror (12, 14, 16) as a function of the setting of at least one of the rear-view mirrors (12, 14, 16) and/or of the seat setting of the driver's seat (42).

8. System according to Claim 7, **characterized in that** the signal generators (32, 34, 36, 38) are optical and/or acoustic signal generators.

9. System according to Claim 7 or 8, **characterized in that** optical signal generators (32, 34, 36, 38) are mounted in such a way that they are located in the field of view (20, 21, 22) of the vehicle driver (18) when the vehicle driver looks into the rear-view mirror or the rear-view mirrors (12, 14, 16).

10. System according to Claim 7, 8 or 9, **characterized in that** optical signal generators (32, 34, 36, 38) are mounted in the region of the rear-view mirrors (12, 14, 16) of the vehicle, in particular of the interior rear-view mirror (16) and/or of the exterior rear-view mirrors (12, 14).

11. System according to any of the Claims 7 to 10, **characterized in that** optical signal generators (32, 34, 36, 38) are arranged in or on the surface of at least one rear-view mirror (12, 14, 16), in particular in the edge region of the respective rear-view mirror (12, 14, 16).

12. System according to any of the Claims 7 to 11, **characterized in that** optical signal generators (32, 34, 36, 38) are arranged in such a way that they are covered by the surface of the mirror glass and light up through the mirror glass in a manner visible to the vehicle driver on emitting the warning signal.

## Revendications

1. Procédé de fonctionnement d'un système de surveillance de l'environnement d'un véhicule, favorisant les manoeuvres de stationnement d'un véhicule (10), de telle sorte que la zone proche du véhicule est surveillée, que la zone (TW), située à l'intérieur de la zone proche surveillée, mais que le conducteur du véhicule (18) ne peut pas voir en regardant dans le rétroviseur (12, 14, 16) respectif, est déterminée en fonction du réglage d'au moins un des rétroviseurs (12, 14, 16) et/ou du réglage du siège du conducteur (42), et qu'un émetteur de signaux (32, 34, 36, 38) génère un signal d'alarme lorsqu'un objet (26), en particulier un autre véhicule, se situe dans cette zone (TW) non visible par le conducteur (18).

2. Procédé selon la revendication 1, **caractérisé en ce qu'**un signal d'alarme est également généré lorsqu'un objet (26) se situe dans les zones adjacentes aux zones (TW) non visibles.

3. Procédé selon la revendication 1 ou 2, **caractérisé en ce que** le signal d'alarme est un signal acoustique et/ou optique.

4. Procédé selon l'une quelconque des revendications précédentes, **caractérisé en ce que** le signal d'alarme est un signal optique, qui est situé dans le champ de vision (20, 21, 22) du conducteur (18) lorsque le conducteur (18) regarde dans le ou les rétroviseurs.

5. Procédé selon la revendication 4, **caractérisé en ce que** le signal optique apparaît dans la zone des rétroviseurs (12, 14, 16) du véhicule (10), en particulier du rétroviseur intérieur (16) et/ou des rétroviseurs latéraux (12, 14).

6. Procédé selon la revendication 4 ou 5, **caractérisé en ce que** le signal optique apparaît dans ou sur la surface d'au moins un rétroviseur (12, 14, 16), en particulier dans la zone de bordure du rétroviseur (12, 14, 16) respectif.

7. Système de surveillance de l'environnement d'un véhicule destiné à surveiller la zone proche d'un véhicule (10), lequel peut être utilisé pour favoriser les manoeuvres de stationnement d'un véhicule (10) et lequel est apte à la mise en oeuvre du procédé selon l'une quelconque des revendications précédentes, avec des capteurs détectant la zone proche du véhicule, avec un dispositif de commande et/ou de réglage (30) analysant les valeurs enregistrées par les capteurs, avec des capteurs sur les rétroviseurs et/ou sur le siège du conducteur pour détecter le réglage de ceux-ci, et avec au moins un émetteur de signaux (32, 34, 36, 38), qui est activé par le dispositif de commande et/ou de réglage (30) pour générer un signal d'alarme, le dispositif de commande et/ou de réglage (30) déterminant, en fonction du réglage d'au moins un des rétroviseurs (12, 14, 16) et/ou du réglage du siège du conducteur (42), la zone (TW), située à l'intérieur de la zone proche surveillée, mais que le conducteur du véhicule (18) ne peut pas voir en regardant dans le rétroviseur (12, 14, 16) respectif.

8. Système selon la revendication 7, **caractérisé en ce que** les émetteurs de signaux (32, 34, 36, 38) sont des émetteurs de signaux optiques et/ou acoustiques.

9. Système selon la revendication 7 ou 8, **caractérisé en ce que** des émetteurs de signaux (32, 34, 36, 38) optiques sont agencés de telle sorte qu'ils sont situés dans le champ de vision (20, 21, 22) du conducteur (18) lorsque le conducteur (18) regarde dans le ou les rétroviseurs (12, 14, 16).

10. Système selon la revendication 7, 8 ou 9, **caractérisé en ce que** des émetteurs de signaux (32, 34, 36, 38) optiques sont situés dans la zone des rétroviseurs (12, 14, 16) du véhicule, en particulier du rétroviseur intérieur (16) et/ou des rétroviseurs latéraux (12, 14).

11. Système selon l'une quelconque des revendications 7 à 10, **caractérisé en ce que** des émetteurs de signaux (32, 34, 36, 38) optiques sont situés dans ou sur la surface d'au moins un rétroviseur (12, 14, 16), en particulier dans la zone de bordure du rétroviseur (12, 14, 16) respectif.

12. Système selon l'une quelconque des revendications 7 à 11, **caractérisé en ce que** des émetteurs de signaux (32, 34, 36, 38) optiques sont agencés de telle sorte qu'ils sont masqués par la surface du miroir du rétroviseur et, lorsqu'un signal d'alarme est délivré, ils brillent à travers le miroir du rétroviseur de manière à être vus par le conducteur.
